# EUROPÄISCHE PATENTSCHRIFT

(11) **EP 0 565 922 B1**
(45) Veröffentlichungstag und Bekanntmachung des Hinweises auf die Patenterteilung: **22.05.1996**
(21) Anmeldenummer: 93104907.6
(22) Anmeldetag: 25.03.1993
(51) Int. Cl.: B29B 13/04, B29C 35/16, B29B 11/10, B29B 11/12, B29K 21/00, B29L 30/00

(54) **Verfahren und Vorrichtung zum Herstellen von Halbfabrikaten aus einer Mischung aus Kautschuk**
Method and device for manufacturing a rubber half-product
Procédé et dispositif pour l'élaboration d'un demi-produit en caoutchouc

(30) Priorität: 07.04.1992 DE 4211669
(43) Veröffentlichungstag der Anmeldung: 20.10.1993
(73) Patentinhaber: Continental Aktiengesellschaft, D-30165 Hannover (DE)
(72) Erfinder: Kaefer, Michaela, W-3002 Wedemark 1 (DE); Hoffmann, Holger, Dr., W-3068 Helpsen (DE)

(56) Entgegenhaltungen:
- WO-A-89/03294
- DE-A- 3 802 095
- DE-C- 105 691
- GB-A- 1 183 693
- US-A- 2 642 626
- US-A- 4 046 947
- PATENT ABSTRACTS OF JAPAN vol. 11, no. 234 (M-611)(2681) 30. Juli 1987 & JP-A-62 046 607 (TOKAI RUBBER IND.LTD. 28. Februar 1987
- JAPAN PLASTICS AGE Bd. 24, Nr. 211, September 1986, TOKYO JP Seiten 49 - 57 KANJI OTANI 'COOLING PROCESS OF CROSSLINKED POLYETHYLENE'

## Beschreibung

Die Erfindung betrifft ein Verfahren zur Erhöhung der Oberflächenklebrigkeit von kalandrierten und/oder extrudierten Halbfabrikaten aus einer Mischung aus Kautschuk oder kautschukähnlichen Kunststoffen sowie eine Vorrichtung zur Durchführung des Verfahrens.

Bei Halbfabrikaten aus Kautschukmischung, z.B. bei Reifenaufbauteilen kommt es häufig darauf an, der Oberfläche dieser Artikel eine hohe Klebrigkeit zu verleihen, damit bei der Konfektionierung eine gute Haftung zu Nachbarschichten erzielt wird. Es sind mehrere Methoden zur Erhöhung der Oberflächenklebrigkeit von Halbfabrikaten aus Kautschukmischung bekannt. So-werden häufig in einem zusätzlichen Arbeitsschritt Einstreichlösungen angewandt, die die erforderliche Oberflächenklebrigkeit erzeugen.

Der Erfindung liegt die Aufgabe zugrunde, ein günstigeres Fertigungsverfahren für Halbfabrikate der eingangs genannten Art anzugeben, das darüber hinaus in den Fertigungsprozeß der Halbfabrikate unmittelbar integrierbar ist.

Diese Aufgabe wird erfindungsgemäß durch ein Verfahren gelöst, bei dem die aus dem Kalander und/oder Extruder austretenden noch heißen Halbfabrikate einer Schockkühlung mit einer Temperatur von O°C oder weniger unterzogen werden. Der Erfindung liegt die Erkenntnis zugrunde, daß die Oberflächenklebrigkeit eines Halbfabrikats entscheidend erhöht wird, wenn man den heißen Artikel einer Schockkühlung unterwirft, d.h. einer Kühlung mit möglichst großer Kühlgeschwindigkeit. Dies erreicht man nur dann, wenn die Kühltemperatur O°C oder weniger beträgt, bevorzugt sogar unter minus 100°C liegt.

Infolge der starken Erhöhung der Klebkraft an der Oberfläche der Halbfabrikate bietet die Erfindung den Vorteil, daß man bei der Konfektionierung von Kautschukartikeln eine entscheidend verbesserte Haftung an anderen Kautschukteilen erzielt. Durch das Vermeiden von Einstreichlösungen vermeidet man auch das damit verbundene Gasen, so daß sich das erfindungsgemäße Verfahren umweltfreundlicher gestaltet. Obwohl die Kühlung nach der Erfindung primär an der Oberfläche der Halbfabrikate ansetzt, ist sie doch so wirksam, daß bei einigermaßen dünnen Profilen eine konventionelle Kühlung, z.B. mittels eines Wasserbades bei Raumtemperatur völlig entfallen kann. Die Erfindung ist auch bei solchen Bauteilen einsetzbar, bei denen man andernfalls nach bekannten Verfahren zusätzliche Kautschukstreifen zur Erhöhung der Klebrigkeit eingesetzt hat, z.B. sogenannte Unterplatten bei der Herstellung von Laufstreifen für Fahrzeugluftreifen.

Nach einer bevorzugten Ausführungsform der Erfindung erfolgt die Schockkühlung mit einem verflüssigten Gas, z.B. mit flüssigem Stickstoff. Rein theoretisch könnte man das Halbfabrikat aus Kautschukmischung durch ein offenes Bad aus flüssigem Stickstoff laufen lassen, doch ergäben sich damit große Verluste an Stickstoffgas, so daß die Erfindung mit geschlossenen Kühltrommeln durchgeführt wird, in denen sich der flüssige Stickstoff befindet. Das Halbfabrikat wird mit einem möglichst großen Umschlingungswinkel über den Mantel der Kühltrommel geführt, so daß eine große Kühlwirkung in kurzer Zeit erzielt wird. Es sollte eine Temperaturabsenkung um 70 bis 90°C in weniger als 30 sek., bevorzugt in 10 bis 20 sek. erfolgen.

Zur Erhöhung der Kühlwirkung in möglichst kurzer Zeit und damit zur Verbesserung der Schockkühlung können auch mehrere Kühltrommeln hintereinander und/oder übereinander angeordnet sein. Bei zwei übereinander angeordneten Kühltrommeln ist es möglich, das Halbfabrikat in einer S-förmigen bzw. spiegelbildlich S-förmigen Umschlingung um die beiden Trommeln herumzuführen, so daß sowohl die Unterseite als auch die Oberseite des Halbfabrikats einer Kühlwirkung unterzogen wird. Nach einer bevorzugten Ausführungsform weist die Kühltrommel bzw. weisen die Kühltrommeln Zuführleitungen für das Flüssiggas sowie Abführleitungen für das verbrauchte Gas auf, so daß das verbrauchte Gas zurückgewonnen werden kann.

Nachfolgend wird ein Ausführungsbeispiel der Erfindung anhand einer Zeichnung näher erläutert.

Es zeigt in einer schematischen Darstellung
- Fig. 1: eine Vorrichtung zum Kühlen von Laufstreifen für Fahrzeugluftreifen,
- Fig. 2: eine Vorrichtung mit zwei übereinander angeordneten Kühltrommeln zum Kühlen eines endlosen Profils.

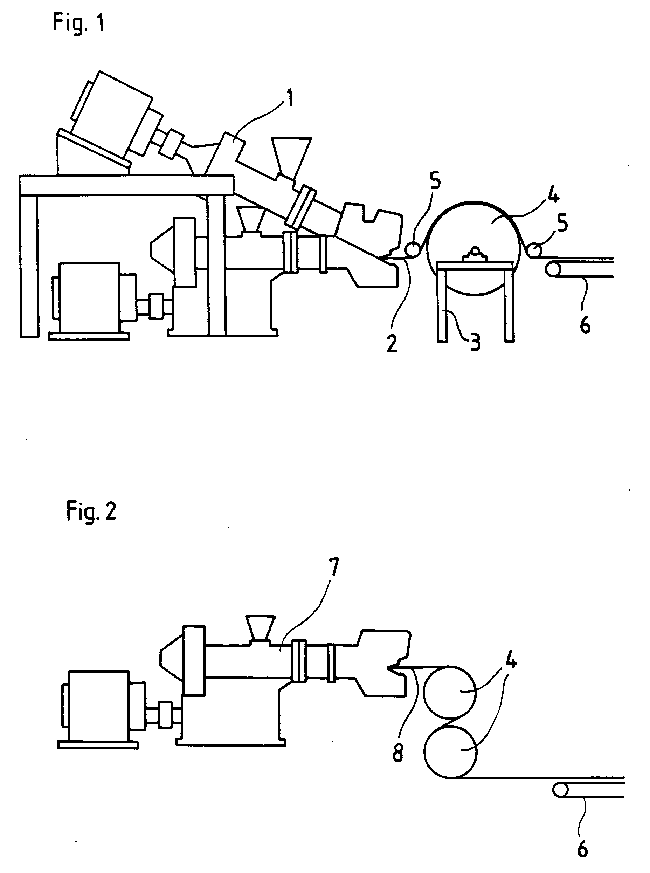

Fig. 1 zeigt einen üblichen Duplex-Extruder 1 zur Erzeugung eines Streifens 2 für Laufstreifen von Fahrzeugluftreifen. Der Streifen 2 besteht aus zwei unterschiedlichen Kautschukmischungen, die in die beiden Einfülltrichter des Duplex-Extruders 1 eingebracht werden. Der Streifen 2 wird einer in einem Gestell 3 ruhenden drehbaren Kühltrommel 4 zugeführt, die er teilweise umschlingt. Dabei dienen höhenverstellbare Umlenkrollen 5 dazu, unterschiedliche Geschwindigkeiten auszugleichen. Der schockgekühlte Streifen 2 kann über ein Förderband 6 einer üblichen Weiterbearbeitung zugeführt werden. Diese kann so aussehen, daß der Streifen 2 einem üblichen Flüssigkeitskühlbad zugeführt werden kann, das z.B. aus einer wässrigen Salzlösung bei Zimmertemperatur bestehen kann. Das Schneiden des Streifens 2 in Laufstreifen für Fahrzeugluftreifen einer gewünschten Länge erfolgt ebenfalls nach bekannten Verfahren.

Die Kühltrommel 4 weist vorliegend einen Durchmesser von 1550 mm und eine Breite von 500 mm auf. Die Umschlingungslänge des Streifens 2 auf der Kühltrommel beträgt ca. 2 m. Die Kühltrommel 4 wird von einem nicht gezeichneten frequenzgeregelten Motor angetrieben. Die Kühltrommel 4 ist zu einem Drittel bis zur Hälfte ihres Volumens mit flüssigem Stickstoff gefüllt, der über eine Zuführung in der Achse der Kühltrommel 4 eingeleitet wird. Die Kühltrommel 4 weist ebenfalls eine nicht gezeichnete Abführöffnung zum Abführen des verbrauchten Stickstoffgases auf, das zurückgewonnen wird und z.B. einer Inertgasheizung bei der Vulkanisation zugeführt wird. Der Streifen 2 verläßt den Extruder 1 mit einer Geschwindigkeit von ca. 9,5 m pro Minute, so daß bei 2 m Umschlingungslänge auf der Kühltrommel 4 sich eine dortige Kontaktzeit von ca. 20 sek. ergibt. Während der flüssige Stickstoff die Kühltrommel 4 zumindest am Anfang auf ca. minus 195°C abkühlt, wurden auf der Unterseite des Streifens 2 unmittelbar hinter der Kühltrommel 4 Temperaturen von 25°C gemessen. Da der Streifen 2 den Extruder 1 mit einer Temperatur von ca. 105°C verläßt, ergibt sich somit im Rahmen der Schockkühlung eine Temperaturverringerung von 80° in 20 sek. Es sollte angemerkt werden, daß es günstig sein kann, Kühltrommeln noch größeren Durchmessers zu verwenden, z.B. mit einem Durchmesser von 2,5 bis 3 m. Weiterhin ist es möglich, zur Verbesserung der Schockkühlung mehrere Kühltrommeln hintereinanderzuschalten.

Fig. 2 zeigt schematisch eine Vorrichtung, bei der in einem Extruder 7 ein dünnes Endlosprofil 8 aus Kautschukmischung erzeugt wird. Das Endlosprofil 8 ist in einer spiegelbildlichen S-Umschlingung um zwei übereinander angeordnete Kühltrommeln 4 geführt und wird dann wiederum über ein Förderband 6 der Weiterverarbeitung oder einer Aufwickelstation zugeführt. Durch die Verwendung von zwei Kühltrommeln 4 und die beschriebene S-Umschlingung erreicht man, daß das Endlosprofil 8 sowohl auf der Unterseite als auch auf der Oberseite schockgekühlt wird, so daß beide Seiten eine Oberfläche erhöhter Klebrigkeit erreichen. Bei dieser Art der Kühlung erübrigt sich in der Regel eine weitere Kühlung in einem üblichen Flüssigkeitsbad.

## Patentansprüche

1. Verfahren zur Erhöhung der Oberflächenklebrigkeit von kalandreirten und/oder extrudierten Halbfabrikaten aus einer Mischung aus Kautschuk oder kautschukähnlichen Kunststoffen, bei dem die aus dem Kalander und/oder Extruder austretenden noch heißen Halbfabrikate einer Schockkühlung mit einer Temperatur von O°C oder weniger unterzogen werden.

2. Verfahren nach Anspruch 1, dadurch gekennzeichnet, daß die Schockkühlung mit einem verflüssigten Gas erfolgt.

3. Verfahren nach Anspruch 1, dadurch gekennzeichnet, daß die Schockkühlung mit flüssigem Stickstoff erfolgt.

4. Verfahren nach Anspruch 1, dadurch gekennzeichnet, daß eine Temperaturabsenkung um 70 bis 90° in weniger als 30 sek. erfolgt.

5. Verfahren nach Anspruch 1, dadurch gekennzeichnet, daß als Halbfabrikate Laufstreifen für Fahrzeugluftreifen oder Profile genommen werden.

6. Verfahren nach Anspruch 1, dadurch gekennzeichnet, daß die Halbfabrikate nach der Schockkühlung einer üblichen Kühlung in einem Flüssigkeitsbad unterworfen werden.

7. Vorrichtung zur Durchführung des Verfahrens nach Anspruch 1 bestehend aus einem Kalander und/oder Extruder und einer dem Kalander und/oder Extruder direkt nachgeschalteten Kühlvorrichtung, dadurch gekennzeichnet, daß die Kühlvorrichtung aus, einer oder mehreren hintereinander und/oder übereinander angeordneten Kühltrommeln (4) mit einem Flüssiggas als Kühlmittel besteht.

8. Vorrichtung nach Anspruch 7, dadurch gekennzeichnet, daß zwei Kühltrommeln (4) übereinander angeordnet sind und daß das Halbfabrikat (2, 8) in S-förmiger Umschlingung um die beiden Trommeln (4) herumgeführt ist.

9. Vorrichtung nach Anspruch 7, dadurch gekennzeichnet, daß Mittel zur Zurückgewinnung des verbrauchten Flüssiggases in der Trommel (4) bzw. den Trommeln (4) vorgesehen sind.

## Claims

1. Method of increasing the surface viscosity of calendered and/or extruded semifinished products from a mixture of rubber or rubber-like plastics materials, wherein the semifinished products, which emerge from the calender and/or extruder and are still hot, are subjected to a shock cooling process using a temperature of 0° C or less.

2. Method according to claim 1, characterised in that the shock cooling is effected with a liquefied gas.

3. Method according to claim 1, characterised in that the shock cooling is effected with liquid nitrogen.

4. Method according to claim 1, characterised in that the temperature is reduced by between 70° and 90° in less than 30 secs.

5. Method according to claim 1, characterised in that tread strips for pneumatic vehicle tyres or profiles are used as the semifinished products.

6. Method according to claim 1, characterised in that, after the shock cooling process, the semifinished products are subjected to a conventional cooling in a liquid bath.

7. Apparatus for accomplishing the method according to claim 1, comprising a calender and/or extruder and a cooling device, which is connected directly downstream of the calender and/or extruder, characterised in that the cooling device comprises one or more cooling drums (4), which are disposed behind one another and/or above one another, having a liquid gas as the coolant.

8. Apparatus according to claim 7, characterised in that two cooling drums (4) are disposed one above the other, and in that the semifinished product (2, 8) is conducted around the two drums (4) in an S-shaped loop.

9. Apparatus according to claim 7, characterised in that means for recovering the consumed liquid gas are provided in the drum (4) or respectively in the drums (4).

## Revendications

1. Procédé pour augmenter l'adhésivité de la surface des demi-produits laminés et/ou extrudés composés d'un mélange de caoutchouc ou de matériaux comparables au caoutchouc, dans lequel les demi-produits encore chauds qui sortent du laminoir ou de l'extrudeuse sont soumis à un refroidissement ultrarapide à une température de 0 °C ou inférieure.

2. Procédé selon la revendication 1, caractérisé en ce que le refroidissement ultrarapide est exécuté avec un gaz liquéfié.

3. Procédé selon la revendication 1, caractérisé en ce que le refroidissement ultrarapide est exécuté avec de l'azote liquide.

4. Procédé selon la revendication 1, caractérisé en ce que la température chute d'une valeur de 70 à 90 ° environ pendant un intervalle de temps inférieur à 30 s.

5. Procédé selon la revendication 1, caractérisé en ce que les demi-produits considérés sont des bandes de roulement pour pneumatiques ou des profilés.

6. Procédé selon la revendication 1, caractérisé en ce que les demi-produits sont soumis après le processus de refroidissement ultrarapide à un processus de refroidissement classique dans un bain liquide.

7. Dispositif pour la mise en oeuvre du procédé selon la revendication 1 comprenant un laminoir et/ou une extrudeuse et un dispositif de refroidissement monté directement en aval du laminoir et/ou de l'extrudeuse, caractérisé en ce que le dispositif de refroidissement comprend un ou plusieurs tambours de refroidissement (4), disposés les uns derrière les autres et/ou les uns au-dessus des autres, qui contiennent un gaz liquide en tant qu'agent de refroidissement.

8. Dispositif selon la revendication 7, caractérisé en ce que deux tambours de refroidissement (4) sont disposés l'un au-dessus de l'autre et en ce que le demi-produit (2, 8) est enroulé en forme de S autour des deux tambours (4).

9. Dispositif selon la revendication 7, caractérisé en ce que des moyens de recyclage du gaz liquide usé dans le tambour (4) ou les tambours (4) sont prévus.
